Europäisches Patentamt

European Patent Office

Office européen des brevets

(19)

(11) EP 0 905 596 A2

(12) EUROPÄISCHE PATENTANMELDUNG

(43) Veröffentlichungstag:
31.03.1999 Patentblatt 1999/13

(51) Int. Cl.$^6$: G05D 7/00

(21) Anmeldenummer: 98115593.0

(22) Anmeldetag: 19.08.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 27.09.1997 DE 19742799

(71) Anmelder: KSB Aktiengesellschaft
67227 Frankenthal (DE)

(72) Erfinder: Lauzi, Markus, Dr.
55131 Mainz (DE)

(54) **Automatische Anpassung des Stellbereiches eines Druckregelkreises in Mehrpumpenanlagen**

(57) Pumpenanordnung zur Druckregelung mit mindestens zwei parallel geschalteten Kreiselpumpen für die mengenvariable Förderung von Flüssigkeiten in Rohrleitungssystemen, wobei ein Mikroprozessorsystem die untere Stellbereichsgrenze ($n_{min}$) selbsttätig zu diskreten Zeitpunkten ($t_0$) beim Aktivieren oder Deaktivieren einer oder mehrerer Kreiselpumpen in Abhängigkeit von einem vorgegebenen Soll- und/oder ermittelten Istwert des Förderdruckes adaptiert, wobei die untere Stellbereichsgrenze ($n_{min}$) nach der Formel

$$n_{min}(t_0) = k * \sqrt{\frac{\text{MINIMUM}\{p_{soll}(t_0), p_{ist}(t_0)\}}{p_{max}}} \qquad (1)$$

vom Mikroprozessor ermittelt wird.

Fig. 1

EP 0 905 596 A2

**Beschreibung**

Die Erfindung betrifft eine Pumpenanordnung zur Druckregelung mit mindestens zwei parallel geschalteten Kreiselpumpen für die mengenvariable Förderung von Flüssigkeiten in Rohrleitungssystemen, wobei ein Sensor zur Erfassung des Förderdruckes der Pumpenanordnung auf deren Druckseite angeordnet ist und ein Mikroprozessorsystem in Abhängigkeit vom Signal des druckseitigen Sensors durch Beeinflussung der Drehzahl von mindestens einer Kreiselpumpe den Förderdruck der Pumpenanordnung regelt.

Ändern sich in einem Rohrleitungssystem die Durchfluß- oder Bedarfsbedingungen auf der Druckseite der Kreiselpumpen, welches bedingt ist durch eine Änderung im Verbraucherverhalten, wie sie beispielsweise durch Wasserentnahme in einem Rohrnetz oder Öffnen von Thermostatventilen in einem Heizungssystem der Fall sein können, dann üben solche Bedarfsschwankungen einen Einfluß auf das Verhalten des Druckregelkreises aus. Für ein ausgewogenes Regelverhalten ist bei starken Bedarfsschwankungen eine genaue Anpassung der Stellbereichsgrenzen erforderlich. Eine manuelle Einstellung bei der Inbetriebnahme oder während des laufenden Betriebs ist für das Bedienungspersonal aufgrund unterschiedlicher Qualifikationen in den meisten Fällen nicht möglich.

Durch die DE-A-27 56 916 ist eine Anordnung parallel betriebener Kreiselpumpen bekannt, mit der ein bedarfsabhängiges Regeln einer Fördermenge erfolgt. Solche Pumpenanordnungen von Kreiselpumpen finden sich in den verschiedensten Rohrleitungssystemen, bei denen ein bestimmter Förderdruck aufrechterhalten werden soll. Die vorbekannte Lösung sieht hierzu eine einzelne drehzahlvariable Kreiselpumpe vor, die bei schwankender Abnahme einer Fördermenge, hier als Bedarfsschwankung bezeichnet, in Verbindung mit einem linearen PID-Regler und einem Frequenzumrichter als Regelpumpe für die Aufrechterhaltung eines Förderdruckes verantwortlich ist. Bei Änderung des Förderbedarfs, der außerhalb des Leistungsbereiches dieser Regelpumpe liegt, werden bei Unterdruck Zusatzpumpen zugeschaltet und bei Überdruck abgeschaltet. Diese laufen mit gleichbleibender Drehzahl und liefern bei gleichen Druckverhältnissen eine konstante Fördermenge.

Weiter sind durch den Prospekt „Hydrovar", Liste 5810 d - 2, der Firma Vogel Pumpen GmbH, Stockerau, Österreich Pumpenanordnungen bekannt, bei denen jede einzelne Pumpe mit eigenem Frequenzumrichter und eigenem Drucksensor ausgestattet ist. Mit Hilfe eines internen Kommunikationssystems auf Basis einer elektronischen RS-485 Schnittstelle sind bis zu 4 Pumpen miteinander verknüpft. Die Art der Umschaltung der Pumpen ist nicht offenbart.

Bei solchen Pumpenanordnungen ist der Umschaltpunkt kritisch, an dem eine weitere Pumpe zugeschaltet oder eine überzählige Pumpe abgeschaltet wird. Ein solcher Vorgang erfordert einen hohen Regelaufwand, wenn während des Zu- oder Abschaltzeitpunktes nachteilige Druckstöße verhindert werden sollen. Die vor dem Zeitpunkt des Schaltens einer Zusatzpumpe im Betrieb befindlichen Pumpen, nachfolgend als Regelpumpen bezeichnet, werden zum Zeitpunkt des Schaltens einer Zusatzpumpe auch gleichzeitig im Betriebsbereich umgeschaltet. Dem muß auf Seiten der Regler-Einstellung Rechnung getragen werden, indem die Stellbereichsgrenzen der neuen Situation angepaßt werden. Hierzu ist i.a. eine genaue Kenntnis der Anlagenbedingungen notwendig. Dies erfordert einen hohen manuellen Aufwand und birgt die Gefahr von Ungenauigkeiten oder Fehleingaben seitens des eine unterschiedliche Qualifikation aufweisenden Bedienungspersonals.

Für den Energieverbrauch des Systems bzw. der hydraulischen Anlage sehr wesentlich ist die Wahl der unteren Grenze für den Stell- oder Ausgangswertebereich des Reglers. Die untere Stellbereichsgrenze, die identisch ist mit der Mindestdrehzahl $n_{min}$, mit der die jeweilige drehzahlvariable Regelpumpe betrieben wird, übt einen entscheidenden Einfluß auf das Regelverhalten aus. Wird $n_{min}$ zu hoch gewählt, hätte dies die nachteilige Wirkung, daß ein durch die Kennlinie der drehzahlvariablen Regelpumpe bestimmter physikalisch notwendiger Stellbereich nicht hinreichend ausgenutzt wird. Ein daraus im System resultierender Überdruck könnte zu einer frühzeitigen Deaktivierung einer Regelpumpe führen. Durch eine solche Deaktivierung könnte der im System vorhandene Druck unter einen Grenzwert abfallen. Der den Systemdruck auf der Druckseite der Pumpenanordnung überwachende Sensor würde daraufhin das Regelsystem veranlassen, ein Signal für ein erneutes Aktivieren einer zuvor gestoppten Pumpe zu liefern. Solche kurzfristigen Schaltvorgänge sind unnötig, führen zu einem erhöhten mechanischen Verschleiß an den Pumpenaggregaten und erzeugen im System unnötige Druckschwankungen.

Ein ungünstiges Regelverhalten ergibt sich auch, wenn die die untere Stellbereichsgrenze darstellende Mindestdrehzahl der jeweiligen drehzahlvariablen Regelpumpe zu niedrig gewählt wird. Eine zu niedrige Wahl von $n_{min}$ macht sich vor allem bei einem sehr geringen Durchfluß $q_{ist}$ störend bemerkbar. Dieser Betriebspunkt ist auch unter dem Begriff Mindermengenbedarf $q_{ist} = q_{min} \approx 0$ bekannt und findet im folgenden Verwendung. In einem solchen Fall würde der Stelleingriff des Druckreglers, d. h. die Drehzahl n der jeweiligen drehzahlvariablen Regelpumpe, ohne Auswirkung auf den als Regelgröße verwendeten Förderdruck $p_{ist}$ bleiben. Die Regelpumpe würde damit das im System zirkulierende Fluid gegen eine nahezu oder völlig geschlossene Armatur drücken, was zur Folge hätte, daß die für den Betrieb der Regelpumpe eingesetzte elektrische Energie durch die Erwärmung des in der Rohrleitung befindlichen Fluids unnötig verbraucht wird. Dies könnte auch zur Folge haben, daß damit die Antriebe aller aktiven Pumpen unnötigerweise aufgeheizt werden, was im günstigsten Fall, bei Vorhandensein und Ansprechen eines thermischen Motorschutzes, zu einem Störzustand durch Abschalten des jeweiligen Motors führen würde.

Eine obere Stellbereichsgrenze $n_{max}$ wird vom Hersteller fest eingestellt und entspricht der maximalen Drehzahl der jeweiligen drehzahlvariablen Regelpumpe. Sie ist von der Frequenz des Stromnetzes und der Bauart des elektrischen Pumpenantriebes abhängig und hat keinen wesentlichen Einfluß auf das Regelverhalten.

Neben den beschriebenen Bedarfsschwankungen kann auch der Druck auf der Saugseite der Kreiselpumpen, nachfolgend als Vordruck $p_{vor}$ bezeichnet, einen Einfluß auf das Regelverhalten ausüben. Die meßtechnisch exakte Erfassung eines schwankenden Vordruckes $p_{vor}$ auf der Saugseite oder eines Differenzdruckes $\Delta p$ zwischen der Saug- und der Druckseite der Pumpenanordnung mit einem zusätzlichen Sensor wird häufig aus Kostengründen nicht durchgeführt.

Bei sehr starken Schwankungen des Vordruckes kann es in dem Rohrleitungssystem zu Schaltspielen der Regelpumpen kommen, wie sie bereits am Beispiel der zu hoch gewählten Mindestdrehzahl beschrieben wurden, wenn weder ein zusätzlicher Vordruck- noch ein Differenzdrucksensor eingesetzt werden. Ein Anlagenbauer oder ein späterer Nutzer einer Pumpen-Anlage erwartet jedoch von einem Druckregelkreis auch bei einer weiten Schwankungsbreite des Vordruckes $p_{vor}$ ein gleichbleibend gutes Regelverhalten.

Die DE-U-296 10 050 bezieht sich auf ein Regelgerät zur optimalen Einstellung der Betriebswerte von elektronischen, stufenlosen Drehzahlregelungen in Heizungsanlagen und Wasserversorgungsanlagen. Zu diesem Zweck wird vorgeschlagen, daß ein Meßwandler in einem System die jeweilige Förderhöhe einer Förderpumpe erfaßt und an einen elektronischen stufenlosen Drehzahlregler übermittelt. Ein Mikrocomputer soll aus diesen Meßwerten vollautomatisch die für den Regelbetrieb der Förderpumpe im hydraulischen System erforderlichen Betriebsparameter unter Verzicht einer Eingabe durch das Bedienungspersonal ermitteln. Weiterhin soll die Neuerung die automatische Ermittlung und Einstellung der für den Regelbetrieb der Förderpumpe im hydraulischen System erforderlichen Förderhöhe, minimalen Drehzahl sowie minimalen und maximalen Förderhöhe ermitteln. Leider mangelt es der Neuerung an der notwendigen Offenbarung, damit ein Fachmann diese Lehre auch nachvollziehen kann. Infolge der fehlenden Angaben ist diese Lösung nicht ausführbar.

Der Erfindung liegt daher das Problem zugrunde, eine Möglichkeit zur einfachen Einstellung eines Druckreglers zu entwickeln, welcher bei einfacher Bedienung ein verschleißminimales Regelverhalten in einem großen Betriebsbereich sicherstellt und weder eine explizite Ermittlung der Fördermenge noch des jeweiligen Vor- oder Differenzdruckwertes durch aufwendige Sensorik erfordert.

Die Lösung dieses Problems erfolgt mit den Merkmalen von Anspruch 1. Mit dieser Lösung paßt das Mikroprozessorsystem die untere Stellbereichsgrenze $n_{min}$ selbsttätig an. Dadurch läßt sich ein gutes Verhalten im Hinblick auf eine Mindermengenabschaltung und eine niedrige Schalthäufigkeit der Regelpumpen erzielen.

Der Betreiber oder Hersteller einer Pumpenanlage gibt dazu lediglich die nachfolgend aufgeführten drei Parameter fest vor. Diese sind zwar ebenfalls anlagenspezifisch, ändern sich jedoch im Gegensatz zur Minimaldrehzahl $n_{min}$ unter den üblichen Betriebszuständen nicht:

- Eine Sollwertvorgabe für den Förderdruck $p_{soll}$ des Regelkreises.

- Die untere Grenze $n_u$ des zulässigen Wertebereiches für die Adaption von $n_{min}$. Sie liegt im allgemeinen in der Größenordnung von 30 % der Maximaldrehzahl $n_{max}$. Das Mikroprozessorsystem verhindert, daß ein unzulässiger Wert von $n_{min}$ unterhalb von $n_u$ eingestellt wird. Eine obere Grenze für $n_{min}$ wird dagegen nicht explizit vorgegeben, da sie durch das Verfahren selbsttätig in Abhängigkeit von $p_{soll}$ ermittelt wird.

- Unterer Wert der Schwankungsbreite des Vordruckwertes $p_{vor, min}$. Dieser Wert ist bei einer Anlagenplanung bekannt und dient auch der saugseitigen Auslegung der Pumpen, um beispielsweise deren Kavitationsfreiheit zu gewährleisten. Steht das zu fördernde Fluid auf der Saugseite vergleichsweise drucklos zur Verfügung, läßt sich $p_{vor, min} = 0$ annehmen. Dies ist häufig der Fall, wenn das Fluid aus einem Reservoir entnommen wird, welches sich auf gleicher geodätischer Höhe befindet wie der Aufstellungsort der Pumpenanordnung.

Weiterhin ist in das Mikroprozessorsystem der Wert des Nullförderdrucks $p_{max}$ für jede eingesetzte drehzahlvariable Pumpe eingespeichert. Dieser Wert gibt als pumpenspezifische Konstante den Förderdruck einer Kreiselpumpe bei Fördermenge $q = 0$ an.

Ein Hersteller oder Nutzer kann die Pumpenanordnung in den unterschiedlichsten Rohrleitungssystemen einsetzen. Die untere Stellbereichsgrenze $n_{min}$ erhält somit für den jeweiligen Einsatzfall lediglich eine sehr grobe Grundeinstellung durch die Vorgabe von $n_u$. Die genaue Anpassung von $n_{min}$ an die vorhandenen Gegebenheiten erfolgt dann selbsttätig mit den Merkmalen des Anspruchs 1. Die Vorgabe der angesprochenen Parameter bzw. die Eingabe der dafür notwendigen Daten in das Mikroprozessorsystem kann beispielsweise in einfachster Weise mit Hilfe einer Kombination aus Tastatur und Display erfolgen, die eine Kommunikation mit dem Mikroprozessor ermöglicht. Ebenso wäre es möglich, durch Schaltelemente oder über ein Bus-System entsprechende Werte in das Mikroprozessorsystem einzuspeichern.

Im Betrieb erfolgt dann die selbsttätige Anpassung der unteren Stellbereichsgrenze $n_{min}$ zu diskreten Zeitpunkten $t_0$ beim Zu- oder Abschalten von Förderpumpen. Das Mikroprozessorsystem dividiert den Minimalwert aus vorgegebenem Solldruck $p_{soll}$ (Führungsgröße) und gemessenem Istwert des Förderdruckes $p_{ist}$ (Regelgröße) durch den Nullförderdruck $p_{max}$ (fester Parameter) der in der nächsten Schalthandlung zu aktivierenden oder zu deaktivierenden drehzahlvariablen Kreiselpumpe. Der so gebildete Quotient wird anschließend radiziert und zuletzt mit einem Normierungsfaktor k multipliziert.

Dieser Ansatz führt zu sprunghaften Änderungen von $n_{min}$ und wird durch Formel (1) beschrieben:

$$n_{min}(t_0) = k * \sqrt{\frac{MINIMUM\{p_{soll}(t_0), p_{ist}(t_0)\}}{p_{max}}} \qquad (1)$$

Hintergrund der Wurzeloperation ist der quadratische Zusammenhang zwischen Drehzahl und Förderdruck einer Kreiselpumpe. Die Minimumbildung verhindert die Ermittlung eines zu hohen Wertes für $n_{min}$ bei Überdruck ($p_{ist}$ > $p_{soll}$) vor der Deaktivierung einer Regelpumpe. Der Normierungsfaktor k ist üblicherweise konstant und paßt den mit der Wurzeloperation errechneten und auf „1" normierten Wert für $n_{min}$ dem Stell- oder Ausgangswertebereich des Reglers an. Dieser wiederum hängt von der Parametrierung eines angeschlossenen, die Pumpendrehzahl verändernden Frequenzumrichters ab.

Die in der DE-A-27 56 916 beschriebene Wurzeloperation dient völlig anderen Zwecken. Eine bei Kreiselpumpen vorzunehmende Linearisierung des Ausgangswertes sieht aufgrund der quadratischen Pumpencharakteristik eine Wurzelbildung vor. Das sich daraus ergebende Stellsignal wird zum einen zur Kompensation eines auftretenden Druckabfalls im Rohrleitungsnetz quadriert und einem Druck-Sollwert in einer Summationsschaltung überlagert, zum anderen wird es in einer Autteilungsstufe zur Beeinflussung des Schaltzustandes aller Regelpumpen genutzt. Im Gegensatz dazu erfolgt bei der Erfindung eine Anpassung der unteren Stellbereichsgrenze $n_{min}$, nicht jedoch eine Beeinflussung des Stellsignals selbst.

Der Ansatz nach Formel (1) gilt für den Großteil von Wasserversorgungsanlagen, wo auf konstanten Förderdruck $p_{ist}$ auf der Druckseite der Pumpenanordnung geregelt wird. In solchen Anlagen ist der anzutreffende Vordruck auf der Saugseite der Pumpenanordnung häufig relativ niedrig, da das zu fördernde Fluid vergleichsweise drucklos zur Verfügung steht oder aus einem Reservoir entnommen wird, welches sich auf gleicher geodätischer Höhe befindet wie der Aufstellungsort der Pumpenanordnung. Der Vordruck muß daher für solche Anwendungsfälle in Formel (1) nicht berücksichtigt werden.

In den Ansprüchen 2 und 3 beschriebene Ausgestaltungen der Erfindung sehen in denjenigen Fällen, wo aufgrund anderer Zulaufbedingungen ein Vordruck auf der Saugseite der Pumpenanordnung ansteht, eine Berücksichtigung dieses Vordruckes bei der Ermittlung von $n_{min}$ vor. Überschreitet der saugseitige Vordruck $p_{vor}$ die Grenze von etwa 20% des Nullförderdrucks $p_{max}$ der eingesetzten Regelpumpe, können erhöhte Schaltfrequenzen bei den Regelpumpen auftreten. Der über die Gleichung (1) ermittelte Wert für die Mindestdrehzahl $n_{min}$ würde dann um wenige Prozentpunkte zu hoch liegen. Die zu aktivierende Pumpe liefe dann bei einer zu hoch eingestellten Mindestdrehzahl $n_{min}$ an, allerdings wäre der sich daraufhin einstellende Förderdruck ebenfalls zu hoch, was wiederum zu einem sofortigen Abschalten dieser dann scheinbar überzähligen Regelpumpe führen würde. Daraufhin würde der Förderdruck so weit abfallen, daß die zuletzt gestoppte Förderpumpe erneut anliefe, was dann möglicherweise wieder mit zu hoher Mindestdrehzahl geschehen würde.

Bei solchen höheren, aber von der Art her konstanten Vordruckverhältnissen können diese Schaltspiele nach einer Ausgestaltung der Erfindung durch Berücksichtigung des Festparameters $p_{vor,\,min}$ in Gleichung (2) unterdrückt werden.

$$n_{min}(t_0) = k * \sqrt{\frac{MINIMUM\{p_{soll}(t_0), p_{ist}(t_0)\} - p_{vor,min}}{p_{max}}} \qquad (2)$$

Dieser Wert von $p_{vor,\,min}$ kann, wie bereits beschrieben bei der Einstellung der Betriebsparameter, in einfacher und üblicher Weise in das System eingegeben werden.

In denjenigen Fällen, wo der Vordruck auf der Saugseite merklichen Schwankungen unterworfen ist, können nach weiteren Ausgestaltungen der Erfindung durch Verwendung eines Sensors für die Erfassung des saugseitigen Vordruckes $p_{vor}$ zum Zeitpunkt $t_0$ der Anpassung gemäß Gleichung (3) die bereits beschriebenen Schaltspiele vermieden werden.

$$n_{min}(t_0) = k * \sqrt{\frac{MINIMUM\{p_{soll}(t_0), p_{ist}(t_0)\} - p_{vor}(t_0)}{p_{max}}} \qquad (3)$$

Sollte der gemessene Vordruck $p_{vor}$ den geforderten Solldruck $p_{soll}$ übersteigen, erfolgt eine entsprechende Fehlermeldung, um eine Schädigung der Pumpenanordnung oder des nachfolgenden Rohrleitungssystems zu verhindern.

Nach einer anderen Ausgestaltung der Erfindung ist anstelle der Vordruckmessung auch eine Differenzdruckmessung möglich. Bei Verwendung eines Sensors für den Differenzdruck $\Delta p$ zwischen der Saug- und der Druckseite der Pumpenanordnung ergibt sich die Mindestdrehzahl gemäß Formel (4).

$$n_{min}(t_0) = k * \sqrt{\frac{MINIMUM\{(p_{soll}(t_0) - p_{ist}(t_0) + \Delta p(t_0)), \Delta p(t_0)\}}{p_{max}}} \qquad (4)$$

Durch die Messung von Saug- und Förderdruck bzw. von Differenz- und Förderdruck und deren explizite Berücksichtigung in den Formeln (3) und (4) werden Schaltspiele in Folge von Vordruckschwankungen unterdrückt.

Steht nur das druckseitige Signal des Förderdruckes $p_{ist}$ der Pumpenanordnung zur Verfügung und ist eine meßtechnische Erfassung des Vor- oder des Differenzdruckes nicht möglich, dann wird bei besonders starken Vordruckschwankungen auf der Saugseite der Pumpenanordnung in Formel (2) der untere physikalisch sinnvolle Festwert $p_{vor} = p_{vor, min}$ eingesetzt. Erreichen die Vordruckschwankungen jedoch eine Größenordnung, die sich mit diesem Verfahren nicht kompensieren lassen, dann können mit weiteren Ausgestaltungen der Erfindung die Auswirkungen dieses schwankenden Vordruckes ebenfalls unterdrückt werden.

Dazu ist das Mikroprozessorsystem mit einer Instanz zur Auswertung des zeitlichen Abstandes $\Delta T$ zwischen den jeweils letzten Aktivierungs- und Deaktivierungsvorgängen von einer oder mehreren Regelpumpen und einem Rechenbaustein für mathematische Operationen ausgestattet oder damit verbunden. Dieser Rechenbaustein kann auf Basis von Fuzzy-Logik realisiert sein.

Löst ein unerwartet hoher Vordruck höhere Schaltspiele der Regelpumpen aus, sieht eine weitere Ausgestaltung der Erfindung vor, daß das in Anspruch 2 formulierte Adaptionsverfahren gemäß der Formeln (5) und (6) erweitert wird. Der zuvor über Formel (2) errechnete Einstellwert für die Mindestdrehzahl $n_{min}(t_0)$ wird über eine weitere Größe *Toleranz* $\Delta n(t)$ solange abgesenkt, bis sich das Schaltverhalten der Regelpumpen beruhigt hat.

$$n_{min}(t) = n_{min}(t_0) - \Delta n(t) \qquad (5)$$

In der gleichen Weise läßt sich der Wert von $n_{min}(t)$ mit einem negativen Toleranzwert wieder langsam anheben, sobald sich das Schaltverhalten der Regelpumpen über längere Zeit beruhigt hat. Somit wird auch bei Mindermengenbedarf ein sicheres Abschalten der zuletzt laufenden Regelpumpe gewährleistet.

Diese Absenkung bzw. Anhebung erfolgt im Gegensatz zu den bislang beschriebenen Verfahren entsprechend der Formeln (1) bis (4) nicht sprunghaft, sondern auf kontinuierliche Weise.

Die derart modifizierte untere Drehzahlgrenze $n_{min}(t)$ kann somit Schwankungen des Vordrucks zu Werten oberhalb von $p_{vor,min}$ tolerieren. Werte des Vordrucks unterhalb dieser Auslegungsgrenze führen dauerhaft zu schwerwiegenden Problemen (z. B. Schäden durch Trockenlauf der Pumpen bei Rohrbruch auf der Saugseite) und sind nicht Gegenstand dieser Erfindung.

Der Wert der Toleranz $\Delta n(t)$ wird mit Hilfe einer rekursiven Summenbildung bestimmt. Dazu werden entsprechend der Formel 6 die mittlere Zeitdauer $\Delta T$ zwischen zwei Schaltvorgängen bei den Regelpumpen und die bereits im vorangegangenen Rechenzyklus eingestellte Toleranz $\Delta n(t-T_0)$ mit Hilfe des Funktionals $v(\cdot)$ berücksichtigt. Der Zeitwert $T_0$ entspricht dabei der Abtastzeitkonstanten des Mikroprozessorsystems.

$$\Delta n(t) = \Delta n(t - T_0) + v(\Delta T(t), \Delta n(t - T_0)) \qquad (6)$$

Der auf diese Weise ermittelte neue Toleranzwert $\Delta n(t)$ geht wiederum im nächsten Rechenzyklus in Formel (5) ein.

Das Ergebnis einer Berechnung des Funktionals $v(\cdot)$ wird nachfolgend als Toleranzänderung $v$ bezeichnet. Wird das Funktional $v(\cdot)$ mit Hilfe eines Rechenbausteins auf Basis von Fuzzy-Logik realisiert, kann der Hersteller in nahezu idealer Form sein Expertenwissen hinterlegen. Dieses Expertenwissen wird einem Fuzzy-Rechenblock in Form einer sogenannten Regelbasis und den zugehörigen Referenzmengen übergeben. Die Regelbasis enthält dabei die strukturellen Verknüpfungen zwischen den Ein- und Ausgängen, die Referenzmengen werden als Fuzzy-Sets bezeichnet und unterteilen die Wertebereiche der Eingänge und Ausgänge des Fuzzy-Rechenblockes in Teilmengen mit unscharfen und fließenden Übergängen.

Innerhalb der Regelbasis des Fuzzy-Bausteins sind neun Einzelregeln definiert, die sich zu vier Regelgruppen zusammenfassen lassen:

**1. Erhöhen der Toleranz** (bzw. Absenken von $n_{min}$):

(1a) **Wenn** $\Delta T = kurz$      **Und** $\Delta n = Null$ **Oder**
(1b) **Wenn** $\Delta T = kurz$      **Und** $\Delta n = niedrig$ **Oder**
(1c) **Wenn** $\Delta T = sehr\ kurz$  **Und** $\Delta n = niedrig$
                         **Dann** $\nu = positiv$

**2. Starkes Erhöhen der Toleranz:**

(2a) **Wenn** $\Delta T = sehr\ kurz$  **Und** $\Delta n = Null$
                         **Dann** $\nu = sehr\ positiv$

Die Regelgruppen (1) und (2) beschreiben die Reaktion des Fuzzy-Bausteines auf eine hohe Schalthäufigkeit der Regelpumpen, die identisch ist mit einem kurzen Schaltabstand, wobei noch unterschieden wird, ob $n_{min}$ bereits stark abgesenkt ist ($\Delta n$ *hoch*) oder sich noch auf hohem Niveau ($\Delta n$ *Null bzw. niedrig*) befindet. In entsprechendem Maße wird $n_{min}$ schnell ($\nu$ *positiv*) oder sehr schnell ($\nu$ *sehr positiv*) abgesenkt.

In gleicher Weise arbeiten die Regelgruppen (3) und (4) zum Erhöhen von $n_{min}$ nach einer Beruhigung des Schaltverhaltens der Regelpumpen bzw. zur Beibehaltung des aktuell erreichten Wertes von $n_{min}$.

**3. Absenken der Toleranz** (bzw. Erhöhen von $n_{min}$):

(3a) **Wenn** $\Delta T = lang$   **Und** $\Delta n = niedrig$ **Oder**
(3b) **Wenn** $\Delta T = lang$   **Und** $\Delta n = hoch$
                   **Dann** $\nu = negativ$

**4. Festhalten der Toleranz** ($n_{min}$ verbleibt unverändert):

(4a) **Wenn** $\Delta T = lang$      **Und** $\Delta n = Null$ **Oder**
(4b) **Wenn** $\Delta T = kurz$      **Und** $\Delta n = hoch$ **Oder**
(4c) **Wenn** $\Delta T = sehr\ kurz$  **Und** $\Delta n = hoch$
                     **Dann** $\nu = Stop$

Die sprachlichen Terme für die Größen $\nu$ (*sehr positiv, positiv, negativ Stop*), $\Delta T$ (*lang, kurz, sehr kurz*) und $\Delta n$ (*Null niedrig, hoch*) werden durch unscharfe Mengen, sogenannte Fuzzy-Sets, numerisch beschrieben. Diese werden mit Hilfe von Stütz- oder Kennwerten in dreieckigem bzw. trapezförmigem Verlauf vorgegeben. Dieser Ansatz entspricht der in der Fuzzy-Theorie üblichen Vorgehensweise.

Hierzu werden vom Hersteller oder Benutzer der Pumpenanordnung insgesamt fünf weitere Kennwerte als konstante Reaktionsgrößen fest vorgegeben. Diese fünf Kennwerte umfassen zwei Schwellwerte $\Delta T_1$ und $\Delta T_2$, bei deren Erreichen eine Anhebung bzw. Absenkung der Mindestdrehzahl $n_{min}$ gemäß Formel (5) erfolgt sowie drei Kennwerte $\nu_1$ bis $\nu_3$, die den Grad der Anhebung bzw. Absenkung der Mindestdrehzahl $n_{min}$ kennzeichnen. Diese Kennwerte bestimmen die Reaktionsgeschwindigkeit bei der kontinuierlichen Absenkung der Mindestdrehzahl gemäß Formel (5).

Während die Kennwerte für die entsprechenden Fuzzy-Sets der ersten Eingangsvariablen $\Delta T$ bzw. der Ausgangsvariablen $\nu$ durch Angabe der Kennwerte $\Delta T_1$ und $\Delta T_2$ bzw. $\nu_1$, $\nu_2$ und $\nu_3$ als konstante Reaktionsgrößen vom Hersteller oder Benutzer festgelegt werden, errechnet der Erfindungsgegenstand selbsttätig die Kennwerte $\Delta n_1$ und $\Delta n_2$ der Fuzzy-Sets für die zweite Eingangsvariable $\Delta n$ des Fuzzy-Blockes.

Die Stützwerte $\Delta n_1$ und $\Delta n_2$ der Fuzzy-Sets für die Eingangsvariable $\Delta n$ hängen direkt ab von der unteren bzw. oberen Grenze des zulässigen Wertebereichs für die Absenkung bzw. Anhebung von $n_{min}$. Die untere Stellbereichsgrenze $n_{min}$ nimmt bei dem vom Hersteller oder Benutzer festgelegten unteren zulässigen Grenzwert $n_u$ ihren minimalen Wert an, eine weitere Absenkung von $n_{min}$ ist also nicht möglich. Der Stützwert $\Delta n_2$ ergibt sich als maximal zulässiger Toleranzwert durch Umstellung von Formel (5):

$$\Delta n_2 = n_{min}(t_0) - n_u \tag{7}$$

Der verbleibende Stützwert $\Delta n_1$ entspricht dem geometrischen Mittelwert des zulässigen Toleranzbereiches $\Delta n = [0, \Delta n_2]$. Er ergibt sich nach Formel 8 zu:

$$\Delta n_1 = \frac{\Delta n_2}{2} \tag{8}$$

Durch die im laufenden Betrieb ständig wechselnden unterschiedlichen Ertülltheitsgrade der Einzelaussagen innerhalb der oben gezeigten Regelbasis ergibt sich mit Hilfe des in der Fuzzy-Theorie bekannten Sum-Prod-Verfahrens schließlich durch Mittelung der Einzelergebnisse aller neun Einzelregeln (1 a - 4 c) ein Wert für die Toleranzänderung $v$ bzw. für die Toleranz $\Delta n(t)$ gemäß Formel (6), der dann mit Hilfe von Formel (5) zur Anpassung der unteren Stellbereichsgrenze $n_{min}$ führt.

Kritisch ist der Betriebsfall nach Einzelregel (4c). Hier ist der durch $n_u$ vorgegebene Toleranzbereich bereits ausgeschöpft, eine weitere Absenkung von $n_{min}$ ist also nicht möglich. Dennoch werden die Regelpumpen mit großer Häufigkeit geschaltet. In einem solchen Fall sieht die Auslegung der Steuerung eine Fehlermeldung vor und reagiert beispielsweise mit der Deaktivierung aller Regelpumpen.

Ein Ausführungsbeispiel der Erfindung ist in den Zeichnungen dargestellt und wird im folgenden näher beschrieben. Es zeigen die

- Fig. 1 eine Anlagenskizze einer typischen Pumpenanordnung mit zugehöriger Regelanlage ohne gesonderte Erfassung des Vor- oder Differenzdruckes zwischen Saug- und Druckseite, die

- Fig. 2a - 2c einen Überblick der zulässigen Wertebereiche der Stellgröße n und der unteren Stellbereichsgrenze $n_{min}$, die

- Fig. 3 - 7 Blockschaltbilder und Zeitverläufe von $n_{min}$ bei unterschiedlichen Verfahren, die

- Fig. 8a - 8c die im Fuzzy-Rechenblock eingesetzten Fuzzy-Sets und die

- Fig. 9 -12 Diagramme, in denen das Regelverhalten der Pumpenanordnung dargestellt ist.

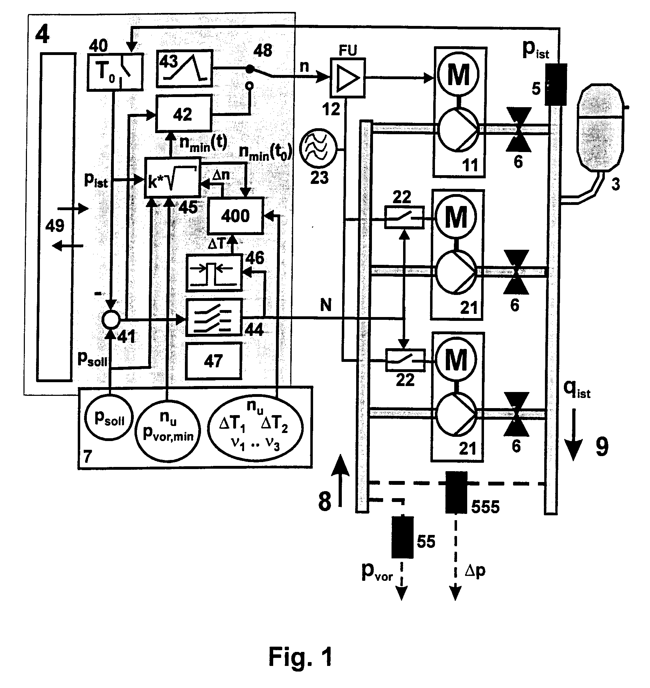

Die in Fig. 1 gezeigte Pumpenanordnung besteht aus drei parallel arbeitenden Kreiselpumpen 11 bzw. 21, die ein Fluid, z. B. Wasser, in einem Rohrleitungssystem von einem gemeinsamen Zufluß 8 über einen gemeinsamen Abfluß 9 zu einem oder mehreren - hier nicht dargestellten - Verbrauchern fördern. Der Zufluß 8 befindet sich auf der Saugseite der Pumpenanordnung und der Abfluß 9 auf der Druckseite. Dabei ist mindestens eine der eingesetzten Kreiselpumpen mit Hilfe eines Frequenzumrichters 12 drehzahlvariabel ausgebildet. Die dargestellte Konfiguration besteht aus einer drehzahlvariablen Kreiselpumpe 11, einem zugehörigen Frequenzumrichter 12 und zwei weiteren über Schütze 22 am Stromnetz 23 schaltbaren Kreiselpumpen 21. Anstelle der schaltbaren Pumpen 21 können auch weitere drehzahlvariable Pumpen 11 mit zugehörigen Frequenzumrichtern 12 eingesetzt werden. Alle zu einem gegebenen Zeitpunkt bei laufendem Betrieb aktivierten Pumpen werden nachfolgend als Regelpumpen bezeichnet.

Zur Verhinderung von Rückströmungen sind die Kreiselpumpen mit Rückschlag-klappen 6 ausgerüstet. Verzichtet wurde auf die Darstellung von manuellen Absperr-Armaturen, die häufig noch an den Anschlußstutzen der Pumpen vorgesehen sind, um im Servicefall, beim Ausbau einer Kreiselpumpe, nach einem vollständigen Schließen den Austritt des Fördermediums verhindern.

Grau hinterlegt ist ein Mikroprozessorsystem 4 dargestellt, welches fortlaufend den auf der Druckseite der Kreiselpumpen 11, 21 herrschenden Fluiddruck mit Hilfe eines Sensors 5 ermittelt. Der mögliche Einsatz eines Sensors 55 zur Messung eines Vordruckes auf der Saugseite 8 oder der Einsatz eines Sensors 555 zur Erfassung eines Differenzdruckes zwischen Saugseite 8 und Druckseite 9 ist in dieser Darstellung durch gestrichelte Linien gezeigt. Ein solcher findet Verwendung für eine Pumpenanordung, wie sie in den Ansprüchen 4 und 6 beschrieben wird. Zur strömungstechnischen Minimierung von auftretenden Druckstößen bei Schaltvorgängen kann auf Seiten des Rohrleitungssystems ein Druckausgleichsbehälter 3 angebracht sein.

In dem Mikroprozessorsystem 4 steuert eine Koordinationsinstanz 49 das Zusammenwirken aller Teilfunktionen 40 bis 48 und 400. Um die Übersichtlichkeit der Darstellung in Fig. 1 zu gewährleisten, sind nur die Signalpfade zwischen diesen Teilfunktionen 40 bis 48 bzw. 400 als Pfeile dargestellt. Die wirktechnischen Verbindungen zwischen der Koordinationsinstanz 49 und den übrigen Teilfunktionen 40 bis 48 und 400 sind dagegen nicht explizit gezeigt. Zur Kommunikation mit einem Benutzer oder einem weiteren Rechnersystem dient ein Interface 7, das sowohl in Form einer Tastatur, eines Displays oder auch in Form eines Bus- oder Modem-Anschlusses vorliegen kann. Hierüber werden alle benötigten Parameter, insbesondere $p_{soll}$, $n_u$, $p_{vor,min}$ und die Fuzzy-Konstanten $v_1$ bis $v_3$ und $\Delta T_1$ bis $\Delta T_2$, in

das Mikroprozessorsystem 4 eingegeben.

Ein Abtast-Halteglied 40 ermittelt in festen Zeitabständen mit einer vom Benutzer oder Hersteller vorgegebenen Abtastzeitkonstanten $T_0$ den Wert $p_{ist}$ des angeschlossenen Drucksensors 5. Ein Reglerbaustein 42, der auch als linearer PID-Regler ausgebildet sein kann, errechnet aus dem durch einen Differenzbilder 41 gelieferten Regelfehler ($p_{soll} - p_{ist}$) den Stellwert n für den angeschlossenen Frequenzumrichter 12. Selbstverständlich können je nach Anlage auch andere Reglertypen Verwendung finden. Die Koordinationsinstanz 49 stellt dabei sicher, daß dieser Stellwert n weder die durch eine Identifikationsinstanz 45 ermittelte untere Grenze $n_{min}$ unterschreitet noch die maximal zulässige, feste obere Pumpendrehzahl $n_{max}$ übersteigt.

Die Identifikationsinstanz 45 errechnet die untere Stellbereichsgrenze $n_{min}$ beim Aktivieren oder Deaktivieren einer Regelpumpe 11, 21. Der rechentechnische Ablauf wird dabei ebenfalls durch die Koordinationsinstanz 49 überwacht. Bei schwankendem, aber nicht gemessenem Vordruck $p_{vor}$, kann der so errechnete Wert für $n_{min}$ durch Einsatz einer Schaltabstandsauswertung 46 mit nachfolgendem Rechenblock 400 so weit abgesenkt werden, daß die aus den Vordruckschwankungen resultierenden Probleme keine Auswirkung auf die geforderte Konstanz der Regelgröße $p_{ist}$ zeigen. Der Rechenblock 400 kann auf Basis von Fuzzy-Logik realisiert sein.

Hierzu ermittelt der Schaltabstandsauswerter 46 die mittlere Zeitdauer ΔT zwischen zwei Schaltvorgängen bei den Regelpumpen 11, 21. In Verbindung mit dem vom Rechenblock 400 im vorangegangenen Rechendurchgang eingestellten Toleranzwert Δn(t-$T_0$) errechnet der Rechenblock 400 mit Hilfe der Toleranzänderung ν gemäß Formel (6) daraus einen neuen Wert für Δn(t), der dann wiederum der Identifikationsinstanz 45 übergeben wird. Dort geschieht im nächsten Rechenschritt mit Hilfe der Differenzbildung nach Formel (5) eine neue Anpassung der unteren Stellbereichsgrenze $n_{min}$(t).

Ein Schaltblock 44 übernimmt bei Unterdruck ($p_{ist} < p_{soll}$) das Aktivieren weiterer Pumpen 21 bzw. beim Auftreten von Überdruck ($p_{ist} > p_{soll}$) die Deaktivierung überzähliger Regelpumpen 11, 21, falls sich die vom Regler 42 errechnete Stellgröße n bereits an ihrer jeweiligen oberen ($n_{max}$) bzw. unteren ($n_{min}$) Grenze befindet. Damit ändert sich die Anzahl N aktiver Regelpumpen 11, 21. Zur Verminderung der Druckstöße beim Schalten von Pumpen mit fester Drehzahl 21 kann eine dazu gegenläufige Steuerung aller drehzahlvariablen Regelpumpen 11 in Form einer Auf- bzw. Abwärts-Rampe mit Hilfe eines Rampengenerators 43 anstelle der druckabhängigen Regelung der Pumpendrehzahl n erfolgen. Hierzu findet ein Umschalter 48 Verwendung, wobei auch hier die Instanz 49 die Koordination aller Vorgänge übernimmt.

Das Regelgerät in Form des Mikroprozessorsystems 4 enthält noch weitere Funktionen, wobei z. B. eine Fehlererkennung 47 zur Erfassung, Überwachung, Verarbeitung und Anzeige von Unregelmäßigkeiten oder Abweichungen innerhalb der Pumpenanordnung dient.

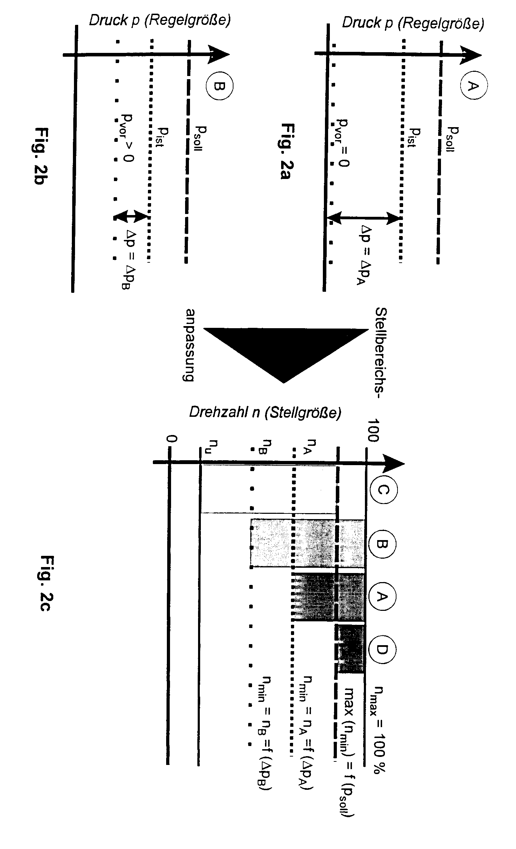

Die Fig. 2a und 2b zeigen nach Art eines Diagramms die Wertebereiche des Regelsystems für den Druck p als Regelgröße und die Fig. 2c zeigt die Pumpendrehzahl n als Stellgröße in vereinfachter Form als zeitlich konstante Signale.

In den Fig. 2a und 2b sind gegen eine horizontale Zeitachse auf einer vertikalen Achse dargestellt:

- als gestrichelte Linie die Werte für den Solldruck $p_{soll}$ als Führungsgröße,
- als eng gepunktete Linie der gemessene Förderdruck $p_{ist}$ als Regelgröße und
- als weit gepunktete Linie der Vordruck $p_{vor}$ als Störgröße.

In Fig. 2a ist der Fall dargestellt, bei dem der auf der Saugseite der Pumpenanordnung anstehende Vordruck $p_{vor}$ gegen Null tendiert. Dagegen liegt der Vordruck $p_{vor}$ in Fig. 2b in der Größenordnung von 30% des geforderten Solldrucks $p_{soll}$ für die Druckseite der Pumpenanordnung. Die wichtigste Größe für die Anpassung des Stellbereichs ist jedoch der Druckunterschied Δp zwischen dem Vordruck $p_{vor}$ auf der Saugseite und dem Förderdruck $p_{ist}$ auf der Druckseite der Pumpenanordnung. Ist dieser Druckunterschied hoch (Fig. 2a), so wird die untere Stellbereichsgrenze $n_{min}$ tendenziell höher eingestellt werden als bei geringer Druckdifferenz (Fig. 2b).

In Fig. 2c sind die zulässigen Wertebereiche für die Stellgröße n und ihre untere Grenze $n_{min}$ als grau hinterlegte Balken gezeigt. Der erste Balken C (ganz links) zeigt den zulässigen Einstellbereich für die untere Stellbereichsgrenze $n_{min}$. Dieser liegt zwischen der vom Benutzer fest vorgegebenen unteren Grenze $n_u$ und dem vom System mit Hilfe von Gleichung (1) für $p_{ist} = p_{soll}$ ermittelten maximalen Wert max($n_{min}$). Dieser Maximalwert tritt auf, sobald die Regelgröße $p_{ist}$ ihren Sollwert $p_{soll}$ erreicht oder überschritten hat. Die untere Stellbereichsgrenze $n_{min}$ wird gemäß Formel (1) auf den hohen Wert $n_A$ eingestellt, wenn der Vordruck gemäß Fig. 2a verschwindet. Daraus ergibt sich ein Stellbereich, der durch den dritten Balken A (Mitte rechts) repräsentiert wird. In der gleichen Weise wird die untere Stellbereichsgrenze $n_{min}$ gemäß der Formeln (2), (3) oder (4) auf den niedrigeren Wert $n_B$ eingestellt, wenn der Vordruck gemäß Fig. 2b einen merklichen Wert annimmt. Daraus ergibt sich ein Stellbereich, der durch den zweiten Balken B (Mitte links) dargestellt ist. Der vierte Balken D (ganz rechts) zeigt den minimal auftretenden Stellbereich für den Druckregler, der sich ergibt, nachdem bei verschwindendem Vordruck $p_{vor}$ = 0 die Regelgröße $p_{ist}$ ihren Sollwert $p_{soll}$ erreicht oder überschritten hat.

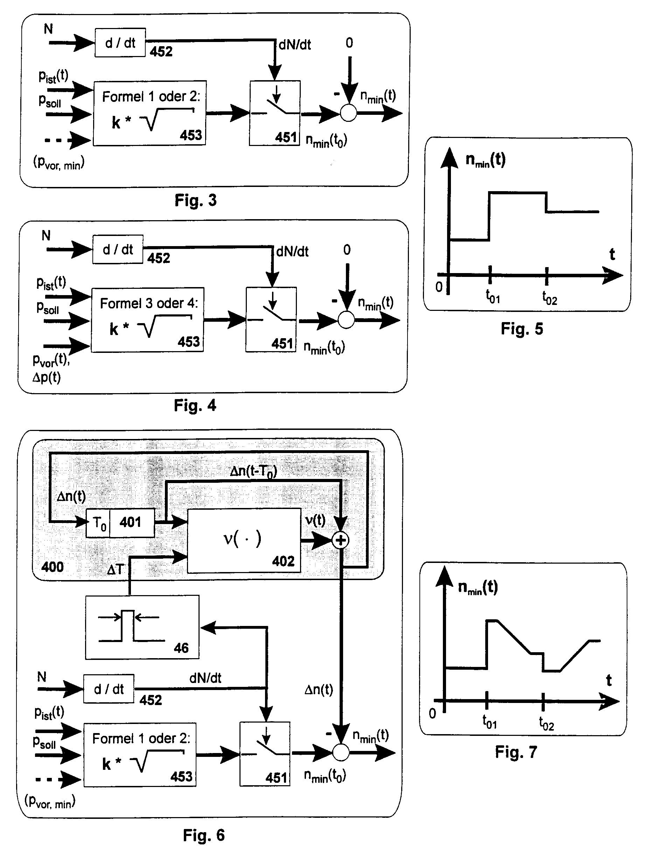

In den Fig. 3 bis 7 sind Blockschaltbilder und Zeitverläufe von $n_{min}$ bei unterschiedlichen Randbedingungen dargestellt, wobei Fig. 3 und 4 die inneren Abläufe der Identifikationsinstanz 45 aus Fig. 1 zeigen. In Fig. 6 sind zusätzlich die inneren Abläufe der Instanzen Schaltabstandsauswertung 46 und Rechenblock 400 dargestellt.

Die Fig. 3 zeigt hierbei als Blockschaltbild eine Stellbereichs-Anpassung, wie sie nach den Ansprüchen 1 oder 2 stattfinden würde. Die Umsetzung erfolgt im Rechen-block 453. Ein Abtast-Halte-Glied 451 garantiert hierbei ein Festhalten des zum Zeitpunkt $t_0$ des letzten Schaltvorgangs einer Regelpumpe ermittelten Wertes von $n_{min}$. Den Schaltvorgang erkennt das zeitliche Differenzierglied 452. Der nur in Formel (2) eingehende Festwert $p_{vor, min}$ ist in Fig. 3 als gestrichelter Pfeil dargestellt.

Die Fig. 4 zeigt als Blockschaltbild eine Stellbereichs-Anpassung, wie sie nach den Ansprüchen 4 oder 6 erfolgen würde. Im Unterschied zur Darstellung von Fig. 3 wird hier noch der mit Hilfe eines Sensors erfaßte Vordruck $p_{vor}$ oder Differenzdruck $\Delta p$ zwischen Saug- und Druckseite bei der Stellbereichs-Anpassung berücksichtigt.

Die Fig. 5 zeigt einen sich nach den Ansprüchen 1, 2, 4 oder 6 ergebenden Zeitverlauf des Wertes für die untere Stellbereichsgrenze $n_{min}$, basierend auf den in den Fig. 3 oder 4 dargestellten Strukturen. Bei einer Änderung der Anzahl N aktiver Regelpumpen erfolgt zu einem Zeitpunkt $t_{01}$ eine sprungförmige Erhöhung des Wertes von $n_{min}$, wohingegen zu einem späteren Zeitpunkt $t_{02}$ eine sprungförmige Absenkung von $n_{min}$ erfolgt.

In Fig. 6 ist ein Blockschaltbild für eine Stellbereichs-Anpassung gezeigt. Hier erfolgt zusätzlich zur sprungförmigen Änderung der unteren Stellbereichsgrenze $n_{min}$ gemäß Fig. 3 oder 4 und Fig. 5 zu den Zeitpunkten $t_{01}$ bzw. $t_{02}$ eine kontinuierliche Absenkung bzw. Anhebung von $n_{min}$ unter Berücksichtigung der Formeln (5) und (6). Dies geschieht mit Hilfe eines Rechenblockes 400, der auf Basis von Fuzzy-Logik realisiert sein kann. Er besteht aus einem Speicherglied 401 und einem Block 402 zur Berechnung der Toleranzänderung $v(t)$. Block 402 nutzt die Information über den zeitlichen Abstand $\Delta T$ zwischen zwei Schaltvorgängen bei den Regelpumpen, der vom Schaltabstandsauswerter 46 geliefert wird.

Die Fig. 7 zeigt den zu Fig. 6 gehörenden Zeitverlauf des Wertes für die untere Stellbereichsgrenze $n_{min}(t)$. Anhand des Kurvenverlaufes wird deutlich, daß durch die kontinuierliche Absenkung bzw. Anhebung von $n_{min}$ eine über die bloße Momentaufnahme des Anlagenzustands zum Zeitpunkt $t_{01}$ bzw. $t_{02}$ der sprungförmigen Änderung hinausgehende Anpassung des Stellbereichs möglich ist.

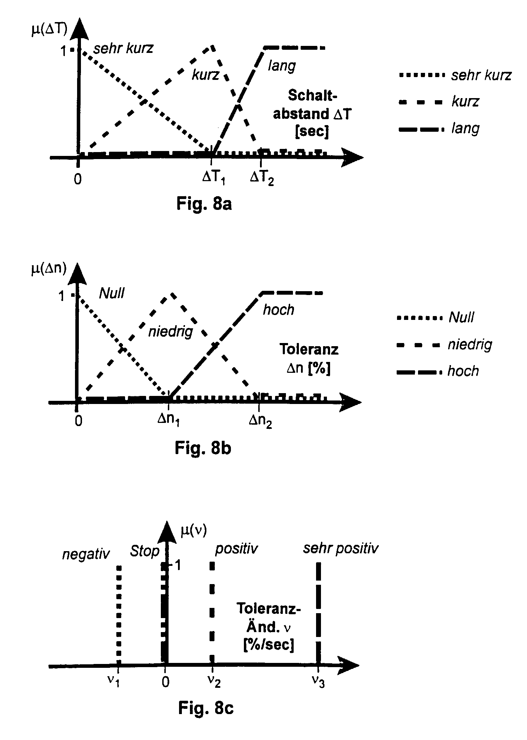

Die Fig. 8a bis 8c zeigen in Diagrammform die von einem Fuzzy-Rechenblock 400 verwendeten Fuzzy-Sets in unterschiedlichen Linienformen, wenn ein solcher gemäß der Fig. 1 bzw. Fig. 6 Anwendung findet.

Fig. 8a zeigt die drei Fuzzy-Sets *sehr kurtz kurz und lang* für die erste Eingangs-variable *Schaltabstand* $\Delta T$ des Rechenblockes 402 in Fig. 6, die durch die beiden vom Hersteller oder Benutzer des Systems vorgegebenen Parameter $\Delta T_1$ und $\Delta T_2$ bestimmt werden. Der dreieckige bzw. trapezförmige Verlauf dieser Fuzzy-Sets ist in diesem Fall vom Hersteller fest vorgegeben.

Fig. 8b zeigt die drei Fuzzy-Sets *Null, niedrig und hoch* für die zweite Eingangsvariable Toleranz $\Delta n$ des Rechenblockes 402 in Fig. 6, die durch die beiden vom System mit Hilfe der Formeln (7) und (8) ermittelten Parameter $\Delta n_1$ und $\Delta n_2$ bestimmt werden. Auch für diese Variable ist der Verlauf der drei Fuzzy-Sets vom Hersteller fest vorgegeben.

Fig. 8c zeigt schließlich die vier Fuzzy-Sets *negativ Stop, positiv und sehrpositiv* für die Ausgangsvariable *Toleranzänderung* $v$ des Rechenblockes 402 in Fig. 6. Während das Fuzzy-Set *Stop* vom Hersteller auf $v=0$ fixiert ist, sind die drei übrigen Fuzzy-Sets vom Hersteller oder Benutzer des Systems durch eine Vorgabe der Parameter $v_1$ bis $v_3$ variabel. Auch für die Ausgangsvariable *Toleranzänderung* $v$ ist die Form aller Fuzzy-Sets als sogenannte Singletons fest vorgegeben.

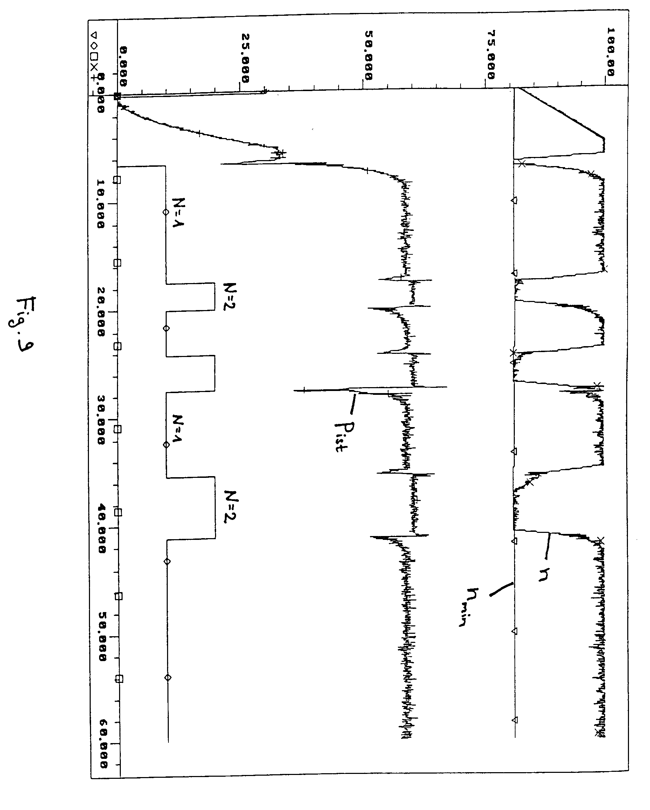

Die Fig. 9 bis 12 zeigen Diagramme der zeitlichen Signalverläufe, in denen das Regelverhalten einer versuchsweise ausgeführten Pumpenanordnung dargestellt ist. Dazu bestand die auf einem Versuchsstand aufgebaute Pumpenanordnung aus einer drehzahlvariablen und weiterer starr am Stromnetz betriebenen Kreiselpumpen. Dargestellt sind immer die gemessenen Zeitverläufe eines Regelzyklusses von 60 Sekunden Dauer.

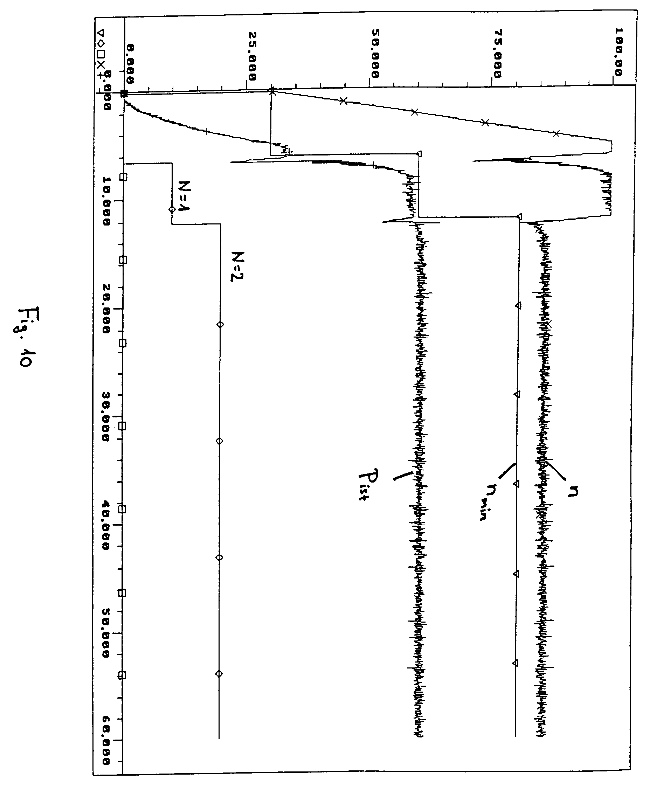

Bei den Fig. 9 und 10 liegt im zeitlichen Abschnitt der ersten 5 Sekunden der Anfahrvorgang der Pumpenanordnung. Hier wird die drehzahlvariable Pumpe 11 in Form einer linearen Rampe in ihrer Drehzahl hochgefahren, wobei sich der Förderdruck $p_{ist}$ entsprechend der Charakteristik der eingesetzten Pumpe und ausgehend von 0 m Förderhöhe aufbaut. Diese Rampe beginnt beim aktuell eingestellten Wert der unteren Stellbereichsgrenze $n_{min}$, die in Fig. 9 bei etwa 80 % der maximalen Drehzahl $n_{max}$ liegt. Sie endet beim Erreichen der maximalen Drehzahl $n_{max}$ oder bei Überschreiten des eingestellten Sollwertes $p_{soll}$ für den Förderdruck $p_{ist}$. Der Sollwert liegt bei 60 m Förderhöhe und wird erst nach Zuschalten einer zweiten Pumpe 21 erreicht. Dazu werden die Zeituerläufe von vier unterschiedlichen Signalen gezeigt. Diese sind:

- die Regelgröße des Förderdruckes $p_{ist}$ (in Metern Förderhöhe),
- die Stellgröße n der variablen Pumpendrehzahl (prozentual bezogen auf die obere Grenze $n_{max}$),
- die untere Stellbereichsgrenze $n_{min}$ (prozentual bezogen auf die obere Grenze $n_{max}$) und
- die Anzahl N aktiver zusätzlicher drehzahlstarrer Regelpumpen 21.

Die zeitlichen Signalverläufe für einen Hochlaufvorgang und ein sich anschließendes Regelverhalten ist bei einem Vordruck $p_{vor}= 0$ gezeigt. Bei der Aufnahme der zeitlichen Signalverläufe war der Fördermengenbedarf bzw. die Öffnung des druckseitigen Abflusses 9 konstant.

In Figur 9 ist im untersten Signalverlauf N(t) eine erhöhte Schalthäufigkeit der drehzahlstarren Regelpumpen 21 festzustellen. Im Diagramm ist die Anzahl aktiver drehzahlstarrer Regelpumpen 21 mit N=1 bzw. N=2 bezeichnet. Es erfolgt ein ständiges Ein- und Ausschalten der zweiten drehzahlstarren Regelpumpe. Ursache für das unerwünschte Schaltverhalten ist ein manuell zu hoch eingestellter Wert für $n_{min}$, der bei etwa 80% liegt. Dies führt zu unerwünschten Druckspitzen und Druckeinbrüchen im Signalverlauf der Regelgröße $p_{ist}$. In entsprechender Weise reagiert der Druckregler 42 mit der Stellgröße n der variablen Pumpendrehzahl.

Im Signalverlauf der Figur 10 erfolgte die Einstellung von $n_{min}$ automatisch vom Mikroprozessorsystem 4 entsprechend Anspruch 1. Die untere Stellbereichsgrenze $n_{min}$ entspricht stets den Anlagenerfordernissen und somit wird die drehzahlvariable Pumpe immer im optimalen Stellbereich betrieben. Ein Hin- und Herschalten der zweiten drehzahlstarren Regelpumpe findet nicht statt. Im Gegensatz zum Signalverlauf der Regelgröße $p_{ist}$ gemäß Fig. 9 zeigen sich im Signalverlauf der Fig. 10 keine unerwünschten Druckspitzen und -einbrüche.

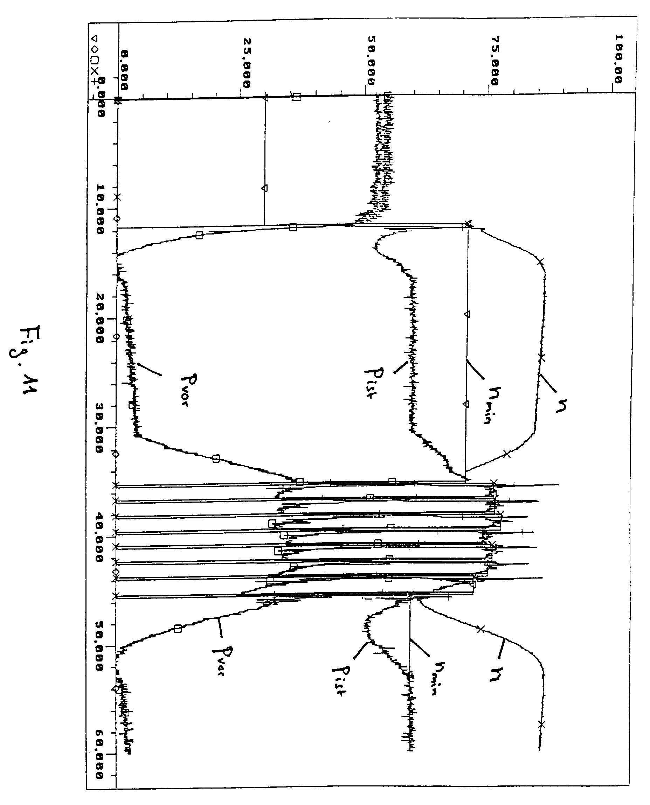

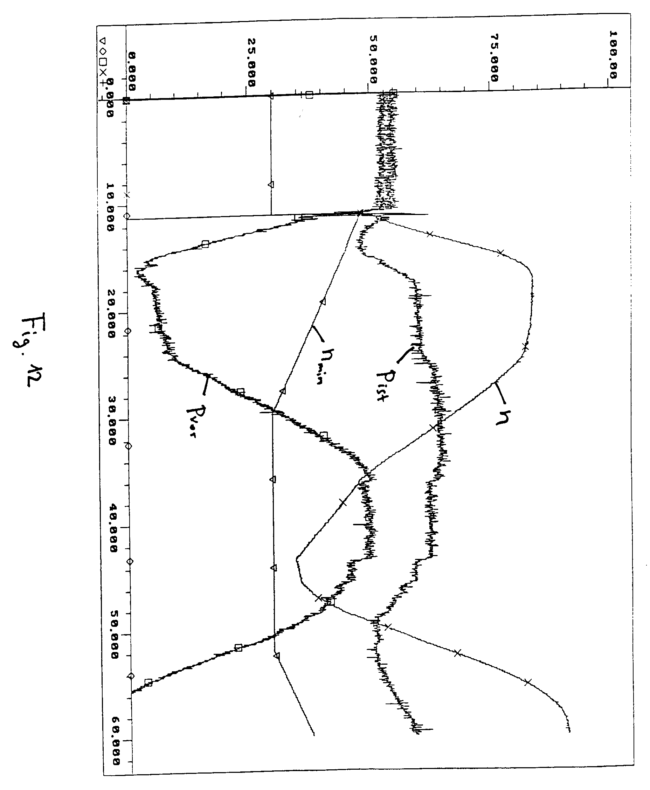

In den Fig. 11 und 12 sind die zeitlichen Signalverläufe für das Regelverhalten der Pumpenanordnung gezeigt, wenn hohe Vordruckwerte und starke Vordruckschwankungen vorliegen. Der Vordruck $p_{vor}$ folgt dabei einem zeitlichen Profil, welches vorsieht, daß $p_{vor}$ zunächst im Zeitbereich von 0 bis 10 Sekunden in der Größenordnung des hier vorgegebenen Sollwertes $p_{soll}$ des Druckes von 60 m Förderhöhe liegt, danach im Zeitbereich zwischen 10 und 15 Sekunden bis nahe 0 m Förderhöhe stark einsinkt, im Zeitraum von 30 bis 35 Sekunden wiederum deutlich bis etwa 50 m Förderhöhe ansteigt, um zuletzt im Zeitbereich zwischen 45 und 50 Sekunden wieder bis nahe 0 m Förderhöhe abzufallen. Während der gesamten Meßzeit war der Fördermengenbedarf bzw. die Öffnung des druckseitigen Abflusses konstant.

Die Fig. 11 zeigt die Auswirkung von starken Vordruckschwankungen auf eine Pumpenanordnung, bei der keine Abhilfemaßnahmen stattfinden. Die Aktivierung der durch das Regelsystem als einzige in Betrieb gesetzten drehzahlvariablen Regelpumpe 11 erfolgt beim Absinken des Vordruckwertes unterhalb 50 m Förderhöhe zum Zeitpunkt t = 11 Sekunden. Aus dem Meßverlauf wird deutlich, daß bei dem hier Anwendung findenden konventionellen Regelungsverfahren extrem starke unerwünschte Schaltvorgänge auftreten. Sobald der Vordruck $p_{vor}$ zum Zeitpunkt von etwa t = 35 Sekunden den halben vorgegebenen Solldruckwert $p_{soll}$ von etwa 30 m Förderhöhe erreicht, kommt es zum ständigen Ein- und Ausschalten der drehzahlvariablen Regelpumpe 11. Die heftigen Reaktionen der Regelgröße $p_{ist}$ machen sich in einem angeschlossenen Rohrleitungssystem äußerst unangenehm durch Geräusche und Druckstöße bemerkbar. Dieses Schaltverhalten der Regelpumpe beruhigt sich erst nach dem späteren Absinken des Vordruckwertes $p_{vor}$ unterhalb von etwa 30 m Förderhöhe, welches etwa zum Zeitpunkt t = 47 Sekunden stattfindet. Der geregelte Förderdruck $p_{ist}$ bewegt sich dann wieder nahe seines Sollwertes $p_{soll}$ von etwa 60 m Förderhöhe.

In Fig. 12 ist das erfindungsgemäße Regelverhalten aufgezeigt. Das Regelsystem reagiert auf den plötzlichen Abfall des Vordruckes zum Zeitpunkt t = 11 Sekunden mit der Aktivierung einer drehzahlvariablen Regelpumpe wie in Fig. 11. Der Rechen-block 400, der in dieser Messung auf Basis von Fuzzy-Logik aufgebaut war, veranlaßt mit Hilfe des Fuzzy-Algorithmus die kontinuierliche Absenkung der unteren Stellbereichsgrenze $n_{min}$, bis diese zum Zeitpunkt t = 30 Sekunden den Wert von $n_u$ = 30 % erreicht hat. Ausgelöst wurde diese Absenkung durch den Einschaltvorgang der drehzahlvariablen Regelpumpe 11. Um den wesentlichen Effekt, die kontinuierliche Absenkung von $n_{min}$, in einem Zeitdiagramm kurzer Meßdauer zeigen zu können, war in dem verwendeten Versuchsaufbau der Fuzzy-Algorithmus durch Vorgabe von sehr hohen Werten für die Schwellwerte $\Delta T_1$ und $\Delta T_2$ so parametriert, daß er sofort und nicht, wie in praktisch ausgeführten Anlagen üblich, erst nach mehreren Schaltvorgängen im Zeitraum einiger Minuten reagierte.

Dieser niedrige Wert für $n_{min}$ verhindert das ständige Ein- und Ausschalten gemäß Fig. 11. Da es zu keiner erhöhten Schalthäufigkeit von Regelpumpen kommt, wird die untere Stellbereichsgrenze $n_{min}$ ab dem Zeitpunkt von t = 52 Sekunden wieder langsam angehoben, um auch bei Mindermengenbedarf ein sicheres Abschalten aller Regelpumpen zu gewährleisten. Während der Zeitspanne von t = 10 bis t = 60 Sekunden verläuft die Stellgröße n gegenläufig zum Vordruck $p_{vor}$, um den Förderdruck $p_{ist}$ im Bereich seines zugehörigen Sollwertes $p_{soll}$ zu halten.

**Liste der verwendeten Abkürzungen**

| | |
|---|---|
| k | = Normierungsfaktor |
| n | = Drehzahl der Regelpumpe (Stellgröße des Druckreglers) |
| $n_{min}$ | = Mindestdrehzahl der Regelpumpe (untere Stellbereichsgrenze) |
| $n_{max}$ | = Höchstdrehzahl der Regelpumpe (obere Stellbereichsgrenze) |
| $n_u$ | = unterer Grenzwert für eine variable Einstellung von $n_{min}$ |
| $\Delta n$ | = Toleranzwert zur Absenkung oder Anhebung der unteren Stellbereichsgrenze $n_{min}$ |

$\nu$ = Toleranzänderung zur Anpassung von $\Delta n$

**N** = Anzahl aktiver Regelpumpen

$p_{ist}$ = Förderdruck (Regelgröße: Messung auf der Druckseite der Pumpen-Anordnung)

$p_{soll}$ = Sollwert für den Förderdruck (Führungsgröße)

$p_{vor}$ = Vordruck (Störgröße: Druck auf der Saugseite der pumpen-Anordnung)

$p_{vor,\,min}$ = Minimalwert des Vordruckes (statische Größe, die nur bei der Anlagen-Auslegung Berücksichtigung findet)

$\Delta p$ = Differenzdruck zwischen Saug- und Druckseite der Pumpenanordung

$p_{max}$ = Nullförderdruck (maximaler Förderdruck einer Kreiselpumpe bei Fördermenge q = 0)

$q_{ist}$ = Durchfluß oder Fördermenge pro Zeiteinheit (Störgröße)

$q_{min}$ = Mindermengenbedarf (sehr geringer Durchfluß: $q_{ist} = q_{min} \approx 0$ )

$t_o$ = Meßzeitpunkt

$T_o$ = Abtastzeitkonstante des Mikrorechnersystems

$\Delta T$ = Zeitabstand zwischen zwei Schaltvorgängen von Regelpumpen

$\Delta T_1$ und $\Delta T_2$ = Kennwerte für die erste Eingangsvariable des Fuzzy-Blockes

$\Delta n_1$ und $\Delta n_2$ = Kennwerte für die zweite Eingangsvariable des Fuzzy-Blockes

$\nu_1$ bis $\nu_3$ = Kennwerte für die Ausgangsvariable des Fuzzy-Blockes

**Patentansprüche**

1. Pumpenanordnung zur Druckregelung mit mindestens zwei parallel geschalteten Kreiselpumpen (11, 21) für die mengenvariable Förderung von Flüssigkeiten in Rohrleitungssystemen, wobei ein Sensor (5) zur Erfassung des Förderdruckes der Pumpenanordnung auf deren Druckseite (9) angeordnet ist und ein Mikroprozessorsystem (4) in Abhängigkeit vom Signal des druckseitigen Sensors (5) durch Beeinflussung der Drehzahl von mindestens einer Kreiselpumpe (11) den Förderdruck der Pumpenanordnung regelt, **dadurch gekennzeichnet,** daß das Mikroprozessorsystem (4) die untere Stellbereichsgrenze ($n_{min}$) selbst-tätig zu diskreten Zeitpunkten ($t_0$) beim Aktivieren oder Deaktivieren einer oder mehrerer Kreiselpumpen (11) in Abhängigkeit von einem vorgegebenen Soll- und/oder ermittelten Istwert des Förderdruckes adaptiert, wobei die untere Stellbereichsgrenze ($n_{min}$) nach der Formel

$$n_{min}(t_0) = k * \sqrt{\frac{\text{MINIMUM}\{p_{soll}(t_0), p_{ist}(t_0)\}}{p_{max}}} \tag{1}$$

vom Mikroprozessorsystem (4) ermittelt wird.

2. Pumpenanordnung nach Anspruch 1, dadurch gekennzeichnet, daß bei einem auf der Saugseite (8) der Pumpenanordnung zu berücksichtigenden Vordruck ($p_{vor}$) die untere Stellbereichsgrenze ($n_{min}$) nach der Formel

$$n_{min}(t_0) = k * \sqrt{\frac{\text{MINIMUM}\{p_{soll}(t_0), p_{ist}(t_0)\} - p_{vor,min}}{p_{max}}} \tag{2}$$

vom Mikroprozessorsystem (4) ermittelt wird.

3. Pumpenanordnung nach Anspruch 2, dadurch gekennzeichnet, daß bei der Minimalwertbildung der Vordruck $p_{vor,min}$ subtrahiert wird, wenn der Vordruck 20% des Nullförderdruckes ($p_{max}$) der Regelpumpe (11) übersteigt.

4. Pumpenanordnung nach Anspruch 1, dadurch gekennzeichnet, daß ein zusätzlicher Sensor (55) zur Erfassung des Vordruckes auf der Saugseite (8) der Pumpenanordnung angeordnet ist, daß mit dem Sensor (55) ein Druckwert $p_{vor}(t_0)$ meßtechnisch ermittelt und bei der Minimalwertbildung subtrahiert wird, wobei die untere Stellbereichsgrenze $n_{min}(t_0)$ nach der Formel

$$n_{min}(t_0) = k * \sqrt{\frac{\text{MINIMUM}\{p_{soll}(t_0), p_{ist}(t_0)\} - p_{vor}(t_0)}{p_{max}}} \tag{3}$$

vom Mikroprozessorsystem (4) ermittelt wird.

5. Pumpenanordnung nach Anspruch 4, dadurch gekennzeichnet, daß bei einem gemessenen Vordruck $p_{vor}(t_0)$, der gleich oder größer als der Solldruck $p_{soll}$ ist, das Mikroprozessorsystem (4) eine Fehlermeldung liefert.

6. Pumpenanordnung nach Anspruch 1, dadurch gekennzeichnet, daß ein zusätzlicher Sensor (555) zur Erfassung des Differenzdruckes $\Delta p$ zwischen der Saug- und Druckseite (8,9) der Pumpenanordnung angeordnet ist, daß mit dem Sensor (555) ein Differenzdruckwert $\Delta p(t_0)$ meßtechnisch ermittelt und bei der Minimalwertbildung berücksichtigt wird, wobei die untere Stellbereichsgrenze $n_{min}(t_0)$ nach der Formel

$$n_{min}(t_0) = k * \sqrt{\frac{MINIMUM\{p_{soll}(t_0), p_{ist}(t_0) + \Delta p(t_0, \Delta p(t_0)\}}{p_{max}}} \qquad (4)$$

vom Mikroprozessorsystem (4) ermittelt wird.

7. Pumpenanordnung nach einem der Ansprüche 1 bis 6, dadurch gekennzeichnet, daß eine Auswerteinstanz (46) die Zeitabstände der letzten Aktivierungs- und / oder Deaktivierungsvorgänge von einer oder mehreren Regelpumpen (11, 21) erfaßt.

8. Pumpenanordnung nach Anspruch 7, dadurch gekennzeichnet, daß die Auswerteinstanz (46) mit dem Mikroprozessorsystem (4) verbunden oder darin integriert ist.

9. Pumpenanordnung nach einem der Ansprüche 1 bis 8, dadurch gekennzeichnet, daß die untere Stellbereichsgrenze ( $n_{min}(t_0)$ ) über eine Rechengröße *Toleranz* $\Delta n(t)$ nach der Formel:

$$n_{min}(t) = n_{min}(t_0) - \Delta n(t) \qquad (5)$$

vom Mikroprozessorsystem (4) kontinuierlich abgesenkt oder angehoben wird.

10. Pumpenanordnung nach Anspruch 9, dadurch gekennzeichnet, daß die Toleranz $\Delta n(t)$ unter Verwendung einer rekursiven Summe und mit Hilfe eines Rechenbausteins (400, 402) für mathematische Operationen $\nu( \cdot )$ in Abhängigkeit der mittleren Zeitdauer $\Delta T$ zwischen zwei Schaltvorgängen bei den Regelpumpen (11, 21) und dem bereits im vorangegangenen Rechenzyklus eingestellten Wert der Toleranz $\Delta n(t-T_0)$ nach der Formel:

$$\Delta n(t) = \Delta n(t - T_0) + \nu(\Delta T(t), \Delta n(t - T_0)) \qquad (6)$$

vom Mikroprozessorsystem (4) ermittelt wird.

11. Pumpenanordnung nach Anspruch 10, dadurch gekennzeichnet, daß der Rechenbaustein (400, 402) auf Basis der Fuzzy-Logik ausgebildet ist.

12. Pumpenanordnung nach einem der Ansprüche 1 bis 11, dadurch gekennzeichnet, daß das Mikroprozessorsystem (4) bei Überschreitung von einer vorgegebenen maximalen Schalthäufigkeit der Regelpumpen (11, 21) eine Fehlermeldung liefert und / oder die Pumpenanordnung deaktiviert.

Fig. 1

Fig. 2a

Druck p (Regelgröße)

Ⓐ

$p_{soll}$

$p_{ist}$

$p_{vor} = 0$

$\Delta p = \Delta p_A$

Fig. 2b

Druck p (Regelgröße)

Ⓑ

$p_{soll}$

$p_{ist}$

$p_{vor} > 0$

$\Delta p = \Delta p_B$

Stellbereichs-
anpassung

Fig. 2c

Drehzahl n (Stellgröße)

0    $n_u$    $n_B$    $n_A$    100

Ⓒ    Ⓑ    Ⓐ    Ⓓ

$n_{max} = 100\,\% = f\,(p_{soll})$

$max\,(n_{min}) = f\,(p_{soll})$

$n_{min} = n_A = f\,(\Delta p_A)$

$n_{min} = n_B = f\,(\Delta p_B)$

Fig. 3

Fig. 4

Fig. 5

Fig. 6

Fig. 7

Fig. 8a

Fig. 8b

Fig. 8c

Fig. 9

Fig. 10

Fig. 11

Fig. 12